# EUROPEAN PATENT APPLICATION

(11) **EP 4 718 850 A1**
(43) Date of publication of application: **01.04.2026**
(21) Application number: 24306594.3
(22) Date of filing: 30.09.2024
(51) Int. Cl.: H04N 19/597, G06N 3/0455

(54) **A VIDEO CODEC FOR VOLUMETRIC REPRESENTATION INCLUDING SCENE VIEWS**

(71) Applicant: InterDigital CE Patent Holdings, SAS, 75017 Paris (FR)
(72) Inventor: SABATER, Neus, 35830 BETTON (FR); SANDRI, Gustavo, 35510 CESSON-SEVIGNE (FR); CHUPEAU, Bertrand, 35700 RENNES (FR); THUDOR, Franck, 35000 RENNES (FR)
(74) Representative: Vossius & Partner Patentanwälte Rechtsanwälte mbB

(57) **Abstract**

Systems, methods, and apparatuses for encoding and/or decoding video are provided in various implementations. An encoder generates and/or receives a plurality of discrete input views. The encoder generates a volumetric data representation based on the plurality of discrete input views. The encoder further generates a plurality of pseudo views and/or a plurality of error pseudo views. The encoder transmits a bitstream to a decoder. The bitstream comprises an encoded volumetric data representation with a plurality of encoded pseudo views and/or a plurality of encoded error pseudo views. The decoder uses the plurality of pseudo views and/or a plurality of error pseudo views to optimize the volumetric data representation and generate an improved volumetric data representation. The decoder generates a plurality of new views based on the improved volumetric data representation. The decoder renders the plurality of new views, generates a final video data, and outputs the final video data.

## Description

### TECHNICAL FIELD

The present embodiments generally relate to systems and methods for video encoding and decoding, and specifically to volumetric representation for new view generation.

### BACKGROUND

Various types of volumetric data representations are used for representing three-dimensional (3D) spaces using multiple images, scenes, and/or views captured by one or more cameras positioned at different angles and/or viewpoints. The volumetric data representations may be indicative of information such as but not limited to a placement of various objects in the 3D spaces, various depths and/or relative depths in the 3D spaces, sizes of the objects, shapes of the objects, colors of various surfaces and/or opacity of various layers etc., for example. When capturing very large scenes, it is difficult to properly recover the large scenes with an enough number of views, even when a professional set-up is used. Further, compression of the volumetric data representation may exacerbate a problem of scarce initial sampling. Therefore, there exists a need for a technique of video encoding and/or decoding that can effectively generate output video data of high quality even in conditions of scarce initial sampling and/or representation of the large scenes with a limited number of views.

### SUMMARY

In some aspects, the present disclosure is directed to implementations of systems and methods for encoding and/or decoding video using a volumetric data representation and a plurality of encoded pseudo views.

In an implementation, a decoder comprising a memory, a transceiver, and a processor is provided. The transceiver is configured to receive, from an encoder, a bitstream comprising an encoded volumetric data representation and the plurality of encoded pseudo views. The processor is configured to decode the bitstream to retrieve a volumetric data representation and a plurality of pseudo views. The processor is further configured to optimize the volumetric data representation based on the plurality of pseudo views to generate an improved volumetric data representation. The processor is further configured to generate a plurality of new views based on the improved volumetric data representation. The processor is further configured to render the plurality of new views to generate a final video data.

In an implementation, a method performed by a video decoder is provided. The method comprises receiving, from an encoder, a bitstream comprising an encoded volumetric data representation and a plurality of encoded pseudo views. The method further includes decoding the bitstream to retrieve a volumetric data representation and a plurality of pseudo views. The method further includes optimizing the volumetric data representation based on the plurality of pseudo views for generating an improved volumetric data representation. The method further includes generating a plurality of new views based on the improved volumetric data representation. The method further includes rendering the plurality of new views for generating a final video data.

In an implementation, the decoder generates a plurality of views based on the volumetric data representation.

In an implementation, the decoder computes a loss function indicative of an error between the plurality of pseudo views and the plurality of views.

In an implementation, the decoder optimizes the volumetric data representation by minimizing the loss function.

In an implementation, the plurality of pseudo views include a first set of input views associated with a first set of input camera positions.

In an implementation, the decoder generates, based on the volumetric data representation, a second set of input views associated with a second set of input camera positions when the plurality of pseudo views do not include the second set of input views.

In an implementation, the present disclosure provides a circuit configured to perform any of the methods of encoding and/or decoding video using the volumetric data representation and the plurality of pseudo views.

In an implementation, the present disclosure provides a video codec device comprising one or more processors configured to perform any of the methods of encoding and/or decoding video using the volumetric data representation and the plurality of pseudo views.

In an implementation, the present disclosure provides a non-transitory computer-readable medium comprising instructions that, when executed by one or more processors of a computing device, cause the one or more processors to perform any of the methods of encoding and/or decoding video using the volumetric data representation and the plurality of pseudo views.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1 illustrates a block diagram of an embodiment of a video encoder in which various aspects of the embodiments may be implemented;
FIG. 2 illustrates a block diagram of an embodiment of a video decoder in which various aspects of the embodiments may be implemented;
FIG. 3 illustrates a block diagram of a system within which aspects of the present embodiments may be implemented;
FIG. 4 illustrates a block diagram of an implementation of a video-based point cloud compression (V-PCC) encoder;
FIG. 5 illustrates a block diagram of an implementation of a V-PCC decoder;
FIG. 6 illustrates a system diagram of an example system of new view generation (NVG) using a volumetric data representation;
FIG. 7 illustrates a system diagram of an example system of video encoding and decoding using a volumetric data representation and a plurality of pseudo views in which various aspects of the embodiments may be implemented;
FIG. 8 illustrates a system diagram of an example system of video encoding and decoding using a volumetric data representation and a plurality of processed error pseudo views in which various aspects of the embodiments may be implemented;
FIG. 9 illustrates a system diagram of an example system of video encoding and decoding using a volumetric data representation and a plurality of error pseudo views in which various aspects of the embodiments may be implemented;
FIG. 10 illustrates a flowchart of an example process of encoding a volumetric data representation and a plurality of pseudo views in which various aspects of the embodiments may be implemented;
FIG. 11 illustrates a flowchart of an example process of decoding a volumetric data representation and a plurality of pseudo views in which various aspects of the embodiments may be implemented;
FIG. 12 illustrates a flowchart of an example process of encoding a volumetric data representation and a plurality of error pseudo views in which various aspects of the embodiments may be implemented; and
FIG. 13 illustrates a flowchart of an example process of decoding a volumetric data representation and a plurality of error pseudo views in which various aspects of the embodiments may be implemented.

### DETAILED DESCRIPTION

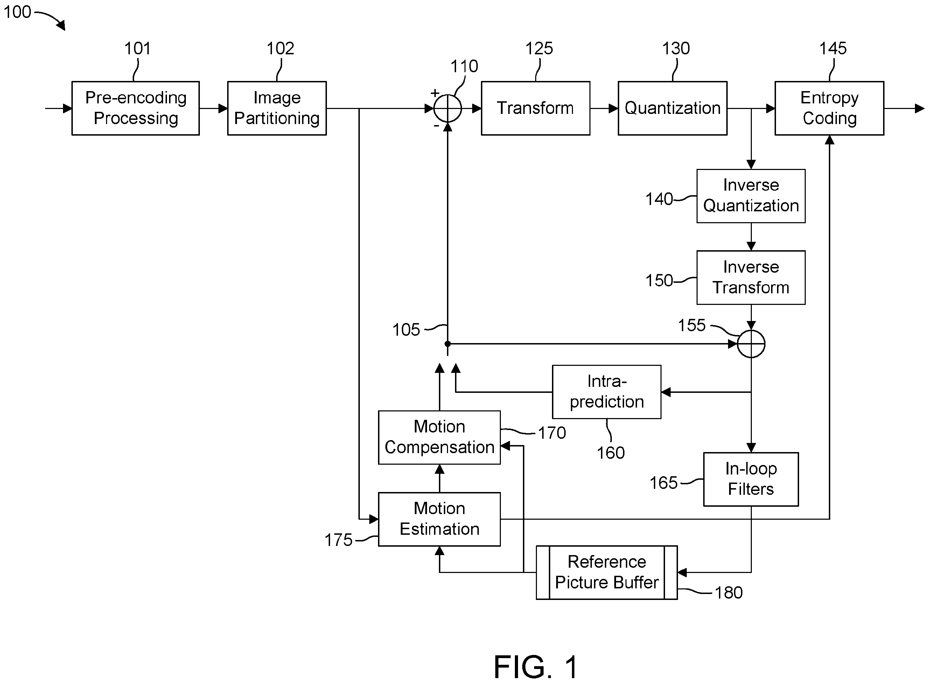

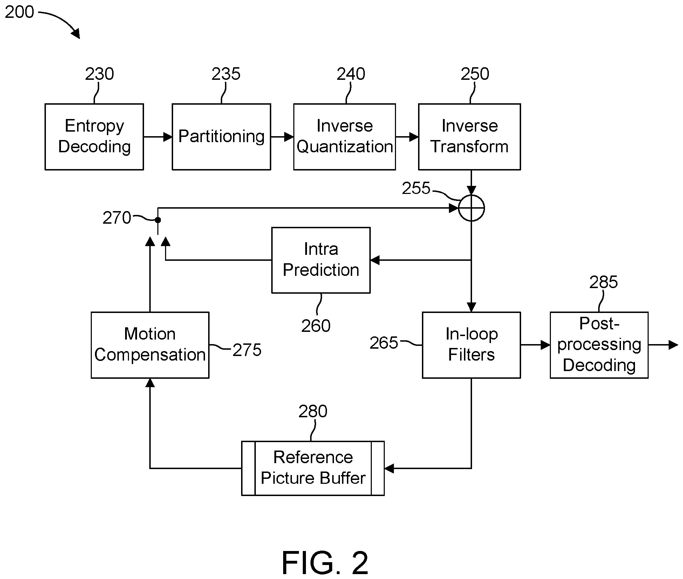

Various methods and other aspects described in this application can be used to modify modules, for example, the motion compensation (170, 275), motion estimation (175), entropy coding (145), intra (160, 260) and/or decoding modules (230), of a video encoder 100 and decoder 200 as shown in FIG. 1 and FIG. 2. Moreover, the present aspects are not limited to versatile video coding (VVC) or high efficiency video coding (HEVC), and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application, for example. The specific values are for example purposes and the aspects described are not limited to these specific values.

FIG. 1 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the encoder 100, a picture is encoded by the encoder elements as described below. The picture to be encoded is partitioned (102) and processed in units of, for example, coding units (CUs). Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder 100 decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking and/or sample adaptive offset (SAO) and/or adaptive loop filter (ALF) filtering to reduce encoding artifacts. The filtered image is stored at a reference picture buffer (180).

FIG. 2 illustrates a block diagram of a video decoder 200. In the decoder 200, a bitstream is decoded by the decoder elements as described below. Video decoder 200 generally performs a decoding pass reciprocal to the encoding pass as described in FIG. 1 . The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280). Note that, for a given picture, the contents of the reference picture buffer 280 on the decoder 200 side are identical to the contents of the reference picture buffer 180 on the encoder 100 side for the same picture.

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

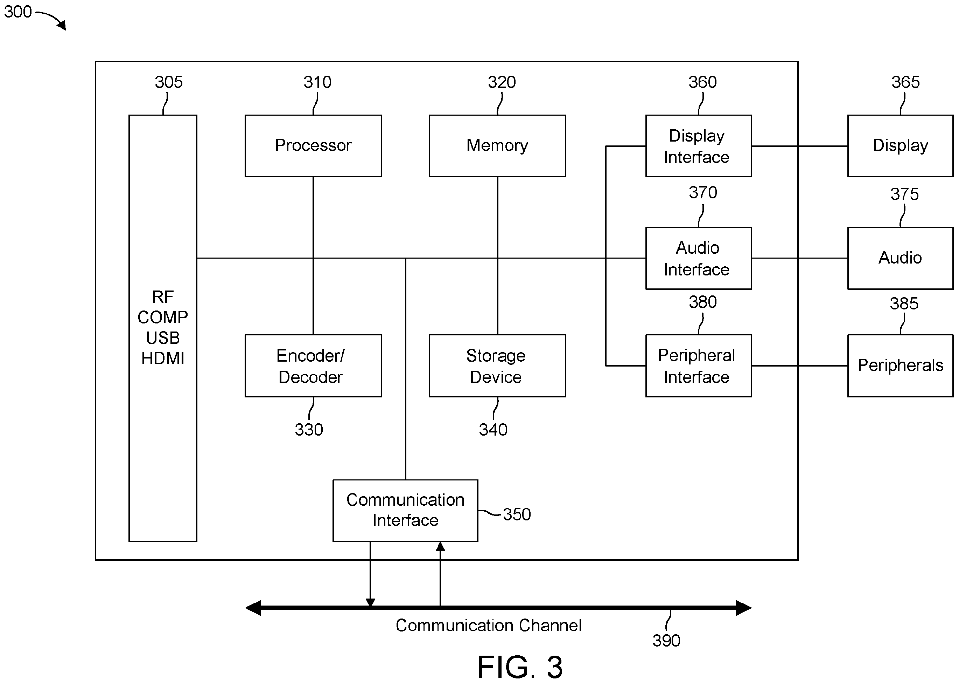

FIG. 3 illustrates a block diagram of an example of a system in which various aspects and embodiments can be implemented. The system 300 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of the system 300, singly or in combination, may be embodied in a single integrated circuit, multiple ICs, and/or discrete components. For example, in at least one embodiment, the processing and encoder/decoder elements of the system 300 are distributed across multiple ICs and/or discrete components. In various embodiments, the system 300 is communicatively coupled to other systems, or to other electronic devices, via, for example, a communications bus or through dedicated input and/or output ports. In various embodiments, the system 300 is configured to implement one or more of the aspects described in this application.

The system 300 includes at least one processor 310 configured to execute instructions loaded therein for implementing, for example, the various aspects described in this application. The processor 310 may include embedded memory, input output interface, and various other circuitries as known in the art. The system 300 includes at least one memory 320 (e.g., a volatile memory device, and/or a non-volatile memory device). The system 300 includes a storage device 340, which may include non-volatile memory and/or volatile memory, including, but not limited to, EEPROM, ROM, PROM, RAM, DRAM, SRAM, flash, magnetic disk drive, and/or optical disk drive. The storage device 340 may include an internal storage device, an attached storage device, and/or a network accessible storage device, as non-limiting examples.

The system 300 includes an encoder/decoder module 330 configured, for example, to process data to provide an encoded video/3D object or decoded video/3D object, and the encoder/decoder module 330 may include its own processor and memory. The encoder/decoder module 330 represents module(s) that may be included in a device to perform the encoding and/or decoding functions. As is known, a device may include one or both of the encoding and decoding modules. Additionally, the encoder/decoder module 330 may be implemented as a separate element of system 300 or may be incorporated within the processor 310 as a combination of hardware and software as known to those skilled in the art.

Program code to be loaded onto the processor 310 or the encoder/decoder 330 to perform the various aspects described in this application may be stored in the storage device 340 and subsequently loaded onto the memory 320 for execution by the processor 310. In accordance with various embodiments, one or more of the processor 310, the memory 320, the storage device 340, and the encoder/decoder module 330 may store one or more of various items during the performance of the processes described in this application. Such stored items may include, but are not limited to, the input video/3D object, the decoded video/3D object or portions of the decoded video/3D object, the bitstream, matrices, variables, and intermediate or final results from the processing of equations, formulas, operations, and operational logic.

In several embodiments, memory inside of the processor 310 and/or the encoder/decoder module 330 is used to store instructions and to provide working memory for processing that is needed during encoding or decoding. In other embodiments, however, a memory external to the processing device (for example, the processing device may be either the processor 310 or the encoder/decoder module 330) is used for one or more of these functions. The external memory may be the memory 320 and/or the storage device 340, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for coding and decoding operations, such as for instance MPEG-2, HEVC, or WC.

The input to the elements of the system 300 may be provided through various input devices as indicated in block 305. Such input devices include, but are not limited to, (i) a radio frequency (RF) portion that receives an RF signal transmitted, for example, over the air by a broadcaster, (ii) a composite input terminal, (iii) a universal serial bus (USB) input terminal, and/or (iv) a high-definition multimedia interface (HDMI) input terminal.

In various embodiments, the input devices of the block 305 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting the system 300 to other electronic devices across the USB and/or HDMI connections. It is to be understood that various aspects of input processing, for example, Reed-Solomon (RS) error correction, may be implemented, for example, within a separate input processing IC or within the processor 310 as necessary. Similarly, aspects of the USB or HDMI interface processing may be implemented within separate interface ICs or within the processor 310 as necessary. The demodulated, error corrected, and demultiplexed stream is provided to various processing elements, including, for example, the processor 310, and the encoder/decoder 330 operating in combination with the memory and storage elements to process the data stream as necessary for presentation on an output device.

Various elements of the system 300 may be provided within an integrated housing, Within the integrated housing, the various elements may be interconnected and transmit data therebetween using suitable connection arrangement 315, for example, an internal bus as known in the art, including the I2C bus, wiring, and printed circuit boards.

The system 300 includes a communication interface 350 that enables communication with other devices via a communication channel 390. The communication interface 350 may include, but is not limited to, a transceiver configured to transmit and to receive data over the communication channel 390. The communication interface 350 may include, but is not limited to, a modem or network card and the communication channel 390 may be implemented, for example, within a wired and/or a wireless medium.

Data is streamed to the system 300, in various embodiments, using a wireless fidelity (Wi-Fi) network such as IEEE 802.11. A Wi-Fi signal of these embodiments is received over the communications channel 390 and the communications interface 350 which are adapted for Wi-Fi communications. The communications channel 390 of these embodiments is typically connected to an access point or router that provides access to outside networks including the Internet for allowing streaming applications and other over-the-top communications. Other embodiments provide streamed data to the system 300 using a set-top box that delivers the data over the HDMI connection of the input block 305. Still other embodiments provide streamed data to the system 300 using the RF connection of the input block 305.

The system 300 may provide an output signal to various output devices, including a display 365, speakers 375, and other peripheral devices 385. The other peripheral devices 385 include, in various examples of embodiments, one or more of a stand-alone digital video recorder (DVR), a disk player, a stereo system, a lighting system, and other devices that provide a function based on the output of the system 300. In various embodiments, control signals are communicated between the system 300 and the display 365, speakers 375, or other peripheral devices 385 using signaling such as AV.Link, CEC, or other communications protocols that enable device- to-device control with or without user intervention. The output devices may be communicatively coupled to the system 300 via dedicated connections through respective interfaces 360, 370, and 380. Alternatively, the output devices may be connected to the system 300 using the communications channel 390 via the communications interface 350. The display 365 and the speakers 375 may be integrated in a single unit with the other components of the system 300 in an electronic device, for example, a television. In various embodiments, the display interface 360 includes a display driver, for example, a timing controller (T Con) chip.

The display 365 and the speaker 375 may alternatively be separate from one or more of the other components, for example, if the RF portion of input 305 is part of a separate set-top box. In various embodiments in which the display 365 and the speakers 375 are external components, the output signal may be provided via dedicated output connections, including, for example, HDMI ports, USB ports, or COMP outputs.

As mentioned above, in many implementations of two-dimensional or three-dimensional environments, environmental details and/or objects or entities may be represented by point clouds or meshes of vertices and/or edges forming a large number of triangles or other shapes. For example, for three-dimensional virtual reality, augmented reality, or extended reality (VR, AR, or XR) environments, virtual objects within the environment may be represented as a mesh of triangles to represent the geometry of the object. In order to provide fine detail, the triangles or other shapes utilized in the mesh may be very small, with the mesh having a correspondingly large number of vertices and edges, potentially in the millions or billions of vertices for a complex object. This may require a correspondingly large amount of memory for storage and bandwidth for transmission. When used for three-dimensional video or animation, the problem is even worse: even a relatively simple environment with 1 million vertices, at 30 frames per second, may require a total bandwidth of 3.6 gigabits per second if uncompressed.

Different encoding and decoding standards and implementations have been proposed, including video-based point cloud compression (V-PCC), geometry-based point cloud compression (GPCC), and video-based dynamic mesh coding (V-DMC), promulgated by the Motion Picture Experts Group (MPEG); P11 dynamic mesh coding, developed by Apple Inc.; and others. A mesh may comprise one or more of the following features: a list of vertex positions; a topology defining the connection between the vertices, for instance a list of faces; and optionally photometric data, such as a texture map or color values associated with vertices or faces. The 3D mesh can be derived from a point cloud of the 3D object. The faces defined by connected vertices can be triangles or any other possible polygons or combinations of polygons. In many implementations, photometric data may be projected on texture map so that the texture map can be encoded as a video image.

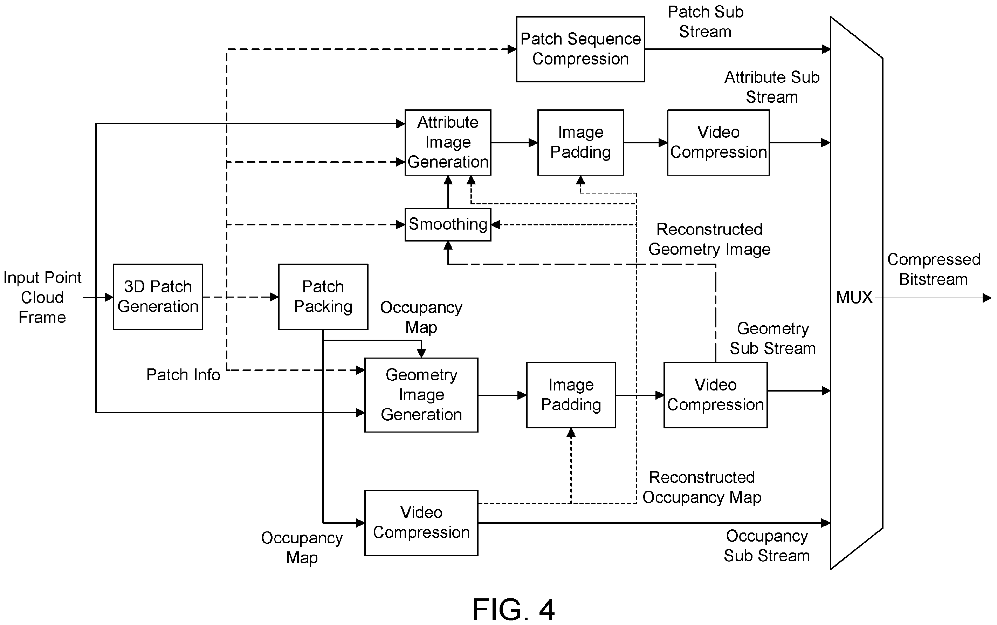

FIG. 4 illustrates a block diagram of an implementation of a V-PCC encoder. In brief overview, in some implementations, volumetric 3D data or a mesh may be split into a plurality of sub-meshes or patches. In some implementations, the frame image may be separated into a set of 3D projections in different components, such as far and near components for geometry and corresponding attribute components. In some implementations, a 2D occupancy map may be created to indicate parts of an image that should be used as a texture or projection on the mesh. The 2D projection may comprise a plurality of independent patches based on geometry characteristics of the input point cloud frame. After the patches have been generated and 2D projection frames for video encoding are created, the occupancy map, geometry information, attribute information and the auxiliary information may be compressed and, in many implementations, post-processed (e.g., smoothed, normalized, scaled, etc.). The separate bitstreams (e.g., patch sub stream, attribute sub stream, geometry sub stream, and occupancy sub stream) may be multiplexed into an output compressed bit stream.

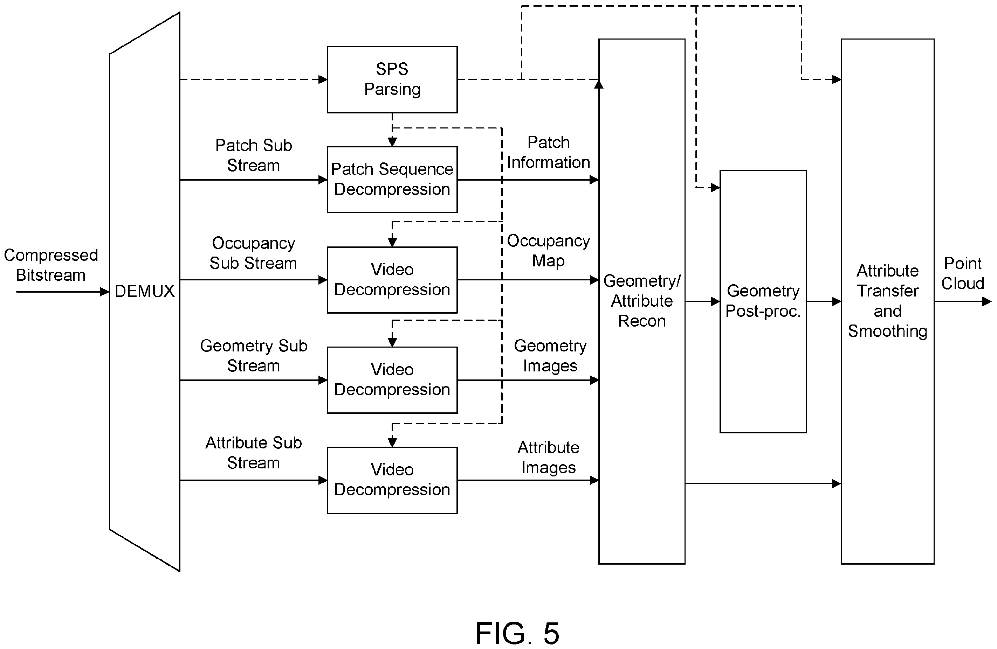

Similarly, FIG. 5 illustrates a block diagram of an implementation of a V-PCC decoder. The incoming bitstream may be demultiplexed to recover the patch, geometry, attribute, and occupancy sub streams. In some implementations, additional auxiliary information may be included in the multiplexed bitstream, such as a sequence parameter set (SPS) sub stream. Such auxiliary information stream may be entropy coded and compressed. The occupancy map may be compressed using video compression, and in some implementations, may be upscaled to a nominal resolution using any suitable techniques (e.g., nearest neighbor, etc.). The geometry stream may be decoded and, in combination with the occupancy map and auxiliary information, may be smoothed or interpolated to reconstruct the point cloud geometry information. Based on the decoded attribute video stream, reconstructed geometry information, occupancy map, and auxiliary information, the point cloud topology and its attributes (e.g., texture, color, lighting, etc.) can be reconstructed.

In the present application, the terms "reconstructed" and "decoded" may be used interchangeably, the terms "encoded" or "coded" may be used interchangeably, the terms "pixel" or "sample" may be used interchangeably, and the terms "image," "picture" and "frame" may be used interchangeably. Usually, but not necessarily, the term "reconstructed" is used at the encoder side while "decoded" is used at the decoder side.

Although discussed above in terms of implementations using V-PCC codecs, the systems and methods discussed herein are not limited to such codecs, and may be used to encode and decode any suitable two-dimensional or three-dimensional mesh or point cloud, and accordingly, the encoder and decoder of FIGs. 4 and 5 are provided by way of example only.

Conventioanlly, different volumetric representations have been proposed to be used in context of new view generation (NVG). The NVG includes generation of one or more new views from an arbitrary viewing angle of a scene when only a limited number of input views have been captured. For instance, a multi-plane images (MPls) representation is a three-dimensional (3D) representation that encodes the scene in a discrete number of parallel planes including color information and transparency. However, generation of MPI data may be challenging depending on the scene.

In another technique, a neural radiance fields (NeRFs) representation is used for the NVG. This technique includes training a neural network that encodes an implicit representation of the scene. A lot of progress has been made to improve a first initial work of the NeRFs but computational complexity remains a main bottleneck of this technique since the NeRFs aims at evaluating a scene luminance for all points of a 3D volume.

A 3D gaussian (3DG) splatting technique has emerged as a new scene representation that is able to render 3D radiance fields with same quality as the NeRFs but much faster. The 3DG splatting technique avoids unnecessary computation in an empty space in order to decrease training time and achieve real-time rendering. The 3DG has already been used in past in computer graphics but recently, with an advent of artificial intelligence (Al) and an arrival of very powerful GPUs, new learning techniques have become popular, creating a paradigm-shift in the realm of 3D scene representation.

Hence, there exist different techniques for volumetric representations and/or 3D representations with different trade-offs regarding quality, complexity and required memory. In any case, regardless of the volumetric representations and/or 3D representations, a sampling of an original radiance field is essential for a final reconstruction. More precisely, a number of input views, a number of camera positions and a quality of each input view (e.g. resolution and/or blur etc.) determines a final quality of a new rendered view.

Therefore, the NVG is still an ill-posed problem, especially when the number of input views is small. In an example, the number of input views may be small for a content captured with a small device such as but not limited to a mobile phone or any other user device for capturing a user generated content. Also, when capturing a number of very large scenes, it may be difficult to properly recover the very large scenes with enough number of views, even when a professional set-up is used. In a context of data transmission, in which the volumetric data is compressed, a problem of scarce initial sampling may be exacerbated. However, the conventional techniques do not provide any solution to this problem.

In an implementation, the video encoding and/or decoding technique of the present disclosure, at an encoder, a plurality of pseudo views are generated and encoded along with a volumetric data representation. Then, at a decoder, the plurality of pseudo views are decoded. The plurality of decoded pseudo views may be used to re-train a 3DG model and/or a neural network, and/or may be used to optimize and/or re-optimize the 3DG model.

In an implementation, a plurality of error pseudo views are transmitted instead of the plurality of pseudo views. The plurality of error pseudo views may include an image difference between different newly generated views.

In an implementation, the plurality of error pseudo views are pre-processed before being encoded and transmitted.

In general, in the NVG problem, the volumetric data representation is used, which may be an MPI, an implicit representation (e.g. NeRF), and/or a 3DGs representation and/or any another 3D representation. Then, a new view may be rendered with one or more operations such as but not limited to an α-blending technique. However, in many use cases in which video data needs is transmitted, the volumetric data representation is compressed due to a large amount and/or a large size of the data.

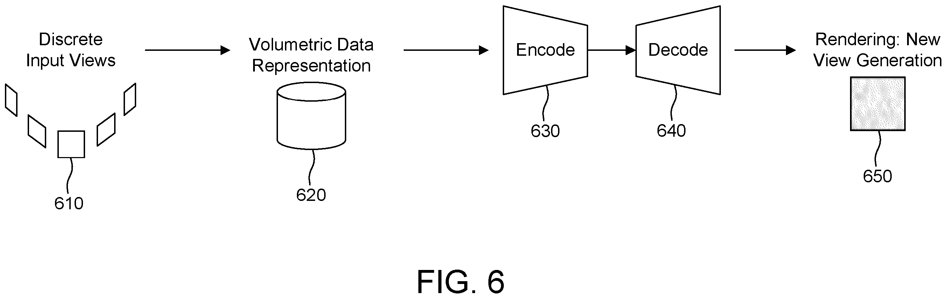

FIG. 6 illustrates a system diagram of an example system of the NVG with compression and transmission of the volumetric data representation.

At 610, the encoder generates and/or receives a plurality of discrete input views. In an example, the plurality of discrete input views may be one or more frames captured by a camera. In an example, the one or more frames and/or the plurality of discrete input views may be captured at different camera positions, same camera positions and/or similar camera positions etc.

At 620, the encoder generates the volumetric data representation. The volumetric data representation may be generated based on the plurality of discrete input views. The volumetric data representation may include but is not limited to 3DGs, NeRFs, and/or MPls etc. for example.

In an example, the volumetric data representation may include the 3DG representation comprising a point cloud associated with a plurality of attributes. The plurality of attributes may include but are not limited to a shape, a location and/or a view-dependent color etc. Each 3DG may be associated with a position in space, a scale, a rotation, an opacity, and/or one or more spherical harmonics etc. In an example, one or more codecs such as but not limited to geometry-based point cloud compression (GPCC) may be used to encode and/or decode the 3DGs and/or the point cloud. The GPCC may also be used for compression and/or decompression of the volumetric data representation. In an example, one or more variations of the GPCC and/or an enhanced GPCC may be used to encode and/or decode the volumetric data representation.

In another example, the volumetric data may include the NeRF representation and/or any implicit neural network. In an example, one or more training parameters for the NeRFs and/or any implicit neural network may be transmitted directly and/or a further compression may be performed using neural network coding (NNC).

In an example, the volumetric data representation may include the MPls which may be compressed and/or decompressed using MPEG immersive video (MIV).

At 630, the encoder encodes the volumetric data representation and transmits the encoded volumetric data representation. The encoded volumetric representation may be transmitted in form of a bitstream.

At 640, the decoder receives the bitstream. The decoder may decode the bitstream to retrieve the volumetric data representation. The decoder may generate a plurality of new views based on the decoded volumetric data representation.

At 650, the decoder renders the plurality of new views to create a final video. Rendering may also include displaying the final video on an input/output device coupled to the decoder.

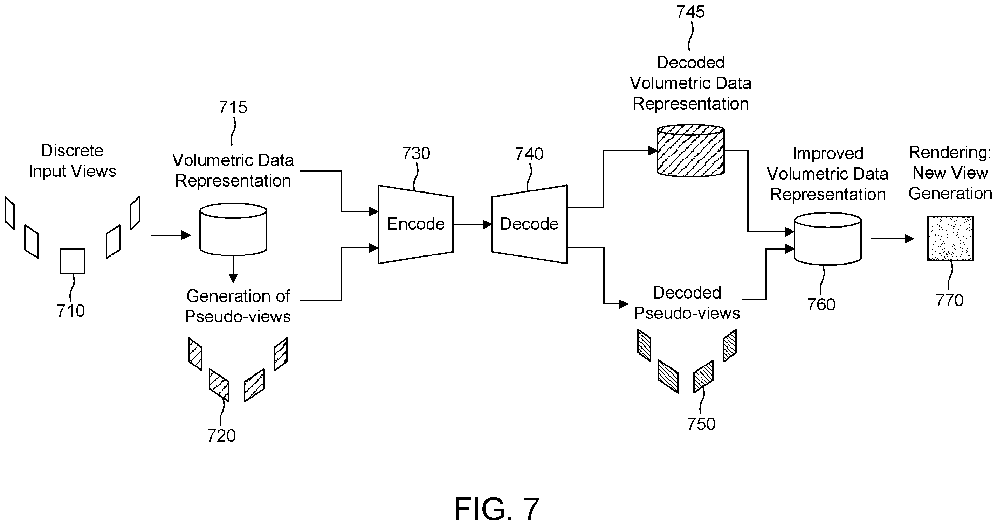

FIG. 7 illustrates a system diagram of an example system of video encoding and decoding using the volumetric data representation and the plurality of pseudo views in which various aspects of the embodiments may be implemented.

At 710, the encoder generates and/or receives the plurality of discrete input views. In an example, the plurality of discrete input views may be the one or more frames captured by the camera of a user device. In an example, the one or more frames and/or the plurality of discrete input views may be captured at different camera positions, same camera positions and/or similar camera positions etc.

At 715, the encoder generates the volumetric data representation. The volumetric data representation may be generated based on the plurality of discrete input views. The volumetric data representation may include but is not limited to 3DGs, NeRFs, and/or MPls etc. for example.

At 720, the encoder generates a plurality of pseudo views based on at least one of: the volumetric data representation and/or the plurality of discrete input views. The plurality of pseudo views may correspond to a plurality of virtual camera positions, whereas the plurality of discrete input views may correspond to a plurality of input camera positions. In an example, a first set of virtual camera positions may be same as and/or similar to a first set of input camera positions. In an example, the plurality of pseudo views may include a first set of discrete input views.

At 730, the encoder encodes and/or compresses the volumetric data representation and the plurality of pseudo views. In an example, the encoder may transmit the volumetric data representation and/or a simplified volumetric data representation. The encoder may generate at least one bitstream comprising the encoded and/or compressed volumetric data representation and/or the plurality of encoded and/or compressed pseudo views. The encoder may transmit the bitstream to the decoder.

At 740, the decoder receives the bitstream comprising the encoded and/or compressed volumetric data representation and the plurality of encoded and/or compressed pseudo views. In an example, the encoded and/or compressed volumetric data representation and the plurality of encoded and/or compressed pseudo views may be transmitted in a single bitstream or in multiple bitstreams. In an example, the encoder may transmit an indication that the plurality of pseudo views may be decoded by the decoder.

At 745, the decoder decodes the bitstream to retrieve the volumetric data representation, i.e. the decoded volumetric data representation.

At 750, the decoder decodes the bitstream to retrieve the plurality of pseudo views, i.e. the plurality of decoded pseudo views.

At 760, the decoder optimizes the volumetric data representation based on the plurality of decoded pseudo views. The decoder generates an improved volumetric data representation. In that, the decoder generates a plurality of views based on the decoded volumetric data representation. The decoder determines a loss function indicative of an error between the plurality of views and the plurality of pseudo views. The decoder minimizes the error, i.e. the loss function for generating the improved volumetric data representation. In any of three volumetric data representations, *viz.* the MPI, the NeRF, and/or the 3DG, for example, the respective volumetric data representations are an output of an iterative process performed for a number of iterations. The function to be minimized may be referred to as the "loss" and/or the "error" since the function measures the final image quality per pixel. Regardless of the format (the NeRF-based, the 3DGS, and/or the MPI etc.) the loss is always computed in the same manner. That is, a view is rendered via alpha-blending and the loss is described in form of a L1 norm, a L2 norm, a perceptual measure and/or a combination of several measures etc., for example.

In an example, the same optimization performed at the encoder may be performed (with one or more extra iterations, for example) by the decoder using the plurality of decoded pseudo views. In another example, performing the optimization at the decoder improves a quality of video rendering with a small cost (e.g. in terms of complexity and/or bitrate). On the contrary, performing the optimization at the encoder would generate a bigger volumetric data representation which would be worse in terms of BD rate.

In an example, when the volumetric data representation is MPI, different methods may be used to compute the MPI of a scene. The MPI may be an output of a neural network. In an example, by optimizing the neural network with the loss defined as the difference between the rendered views and the pseudo views, a decoded MPI may be improved.

At 770, the decoder generates a plurality of new views based on the improved volumetric data representation. The decoder renders the plurality of new views to generate a final video data. The final video data may be displayed to a user on the user device such as but not limited to a touchscreen etc., for example.

In operation, the plurality of pseudo views are generated based on the plurality of discrete input views and/or the volumetric data representation. The plurality of pseudo views are compressed and/or encoded and are formed into the bitstream. The bitstream including the plurality of encoded and/or compressed pseudo views and/or the encoded and/or compressed volumetric data representation is transmitted to the decoder. At the decoder, the decoded pseudo views are used to improve the decoded volumetric data representation.

In an implementation, a number of generated pseudo views may not be limited and/or fixed. Also, one or more pseudo views corresponding to one or more virtual camera positions may not be constrained but may have a better quality if the one or more pseudo views are in a vicinity of one or more input views (and/or have similar camera positions as the one or more input views). In an example, several pseudo views may be equal to a first set of discrete input views. This means, that the first set of discrete input views may be transmitted with the volumetric data representation, which may be of interest in some particular cases.

In an implementation, the plurality of pseudo views are used by the decoder to improve and/or optimize the volumetric data representation and/or generate the improved volumetric data representation. For instance, if the volumetric data representation is computed with a learned-based method, the decoded pseudo views may be used to fine-tune the optimization at the decoder. In an example, this may be implemented when the volumetric data representation includes but is not limited to a set of 3DGs, an implicit neural representation and/or a learned MPI etc., for example. The decoded pseudo views may be considered as a ground-truth data, and a loss function may be computed between the decoded pseudo views and the views generated based on the decoded volumetric data with same viewpoints. In a case that decoded pseudo views are different from a second set of discrete input views, at the decoder side, a second set of views at a second set of input camera positions may be generated using the decoded volumetric data representation. Therefore, the loss function for fine-tuning the volumetric data representation may include an error between the views generated based on the decoded volumetric data and the decoded pseudo views and/or the error between the views generated based on the decoded volumetric data and such generated input views (e.g. the second set of views). This avoids degrading a quality at the second set of input camera positions (e.g. view positions and/or viewpoints etc.). Generally, a loss function measures an error between a ground-truth and an estimated value. In an implementation, the loss function may be L¹ and/or L² norm between the views generated based on the decoded volumetric data and the decoded pseudo views and/or the generated input views, one or more images, an error based on a structural similarity index metric (SSIM) quality metric, a perceptual metric and/or a combination of different metrics. Traditional video codecs may also be used to compress and/or transmit the plurality of pseudo views.

The improved volumetric representation obtained via fine-tuning may be a very light processing task requiring a limited amount of computational resources. One or more burden computations may be performed before the encoding. The benefit of adding a light optimization at the decoder side may be that the quality may be considerably improved. An example includes a convergence to a local minima in an optimization process when there are one or more visibility issues among the one or more views.

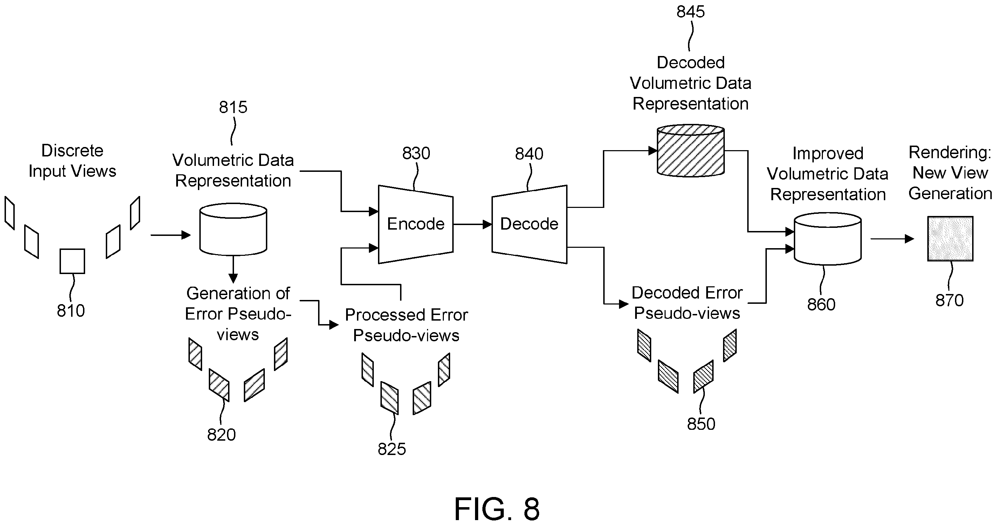

FIG. 8 illustrates a system diagram of an example system of video encoding and/or decoding using the volumetric data representation and a plurality of processed error pseudo views in which various aspects of the embodiments may be implemented.

At 810, the encoder generates and/or receives the plurality of discrete input views.

At 815, the encoder generates the volumetric data representation based on the plurality of discrete input views.

At 820, the encoder generates a plurality of error pseudo views. The plurality of error pseudo views may include one or more differences and/or one or more errors between the plurality of pseudo views and the plurality of discrete input views. A few differences and/or errors may be zero and/or minimal if the corresponding pseudo views are the same as, and/or closely similar to, respective input views. The one or more differences and/or the one or more errors may be determined by pixel-wise comparison of a number of pixels in the plurality of pseudo views and the plurality of discrete input views. Hence, because of such nil and/or minimum values, transmission of the error pseudo views may incur much less overhead than transmission of the plurality of pseudo views, thereby reducing resource consumption and increasing efficiency of a video codec.

At 825, the encoder processes the plurality of error pseudo views to generate the plurality of processed error pseudo views. The encoder may perform one or more resource-intensive processes, and hence, the decoder may only need to perform light processes. This may facilitate high-quality video output even on the user devices (i.e. the decoders) with limited and/or low computational power, thereby enhancing user experience. This may also facilitate low power consumption and/or low resource consumption at the decoder.

At 830, the encoder encodes and/or compresses the volumetric data representation and the plurality of processed error pseudo views. The encoder may generate the bitstream comprising the encoded and/or compressed volumetric data representation and/or the plurality of encoded and/or compressed processed error pseudo views. The encoder may transmit the bitstream to the decoder. The encoded and/or compressed volumetric data representation and the plurality of encoded and/or compressed processed error pseudo views may be transmitted in a single bitstream and/or a multiple bitstreams. The encoder may also transmit an indication that the plurality of processed error pseudo views and/or the plurality of error pseudo views may be decoded by the decoder. In an example, the implementations of using the plurality of pseudo views, the plurality of processed error pseudo views, and/or the plurality of error pseudo views may be used in conjunction, and may be indicated by transmitting one or more indications in and/or with one or more bitstreams.

At 840, the decoder receives the bitstream comprising the encoded volumetric data representation and/or the plurality of encoded processed error pseudo views.

At 845, the decoder decodes the bitstream to retrieve the volumetric data representation, i.e. the decoded volumetric data representation.

At 850, the decoder decodes the bitstream to retrieve the plurality of error pseudo views, i.e. the plurality of decoded error pseudo views.

At 860, the decoder optimizes the volumetric data representation based on the plurality of decoded error pseudo views. The decoder generates the improved volumetric data representation. In an example, the optimization may include minimizing one or more errors and/or loss functions.

At 870, the decoder generates the plurality of new views based on the improved volumetric data representation. The decoder renders the plurality of new views to generate the final video data.

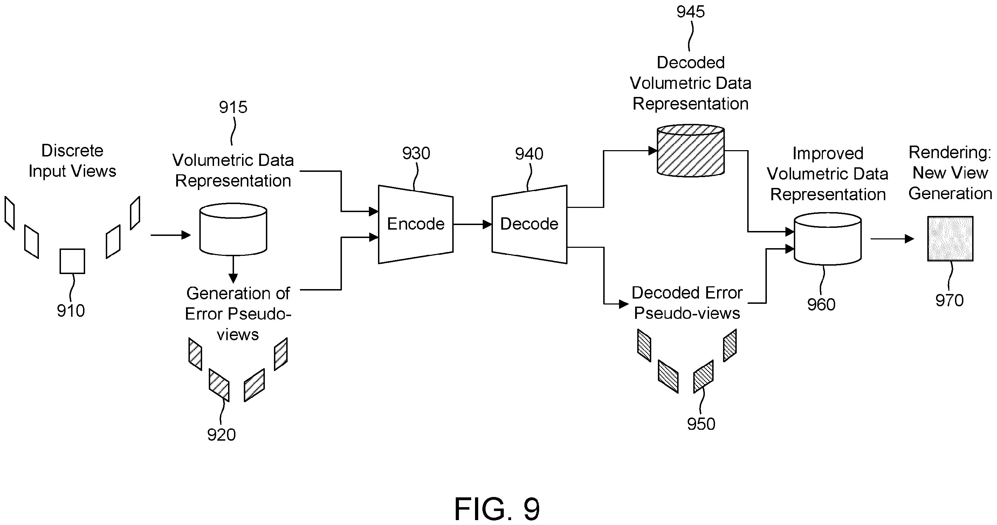

FIG. 9 illustrates a system diagram of an example system of video encoding and/or decoding using the volumetric data representation and the plurality of error pseudo views in which various aspects of the embodiments may be implemented.

At 910, the encoder generates and/or receives the plurality of discrete input views.

At 915, the encoder generates the volumetric data representation based on the plurality of discrete input views.

At 920, the encoder generates a plurality of error pseudo views. The plurality of error pseudo views may include one or more differences and/or one or more errors between the plurality of pseudo views and the plurality of discrete input views.

At 930, the encoder encodes and/or compresses the volumetric data representation and the plurality of error pseudo views. The encoder may generate the bitstream comprising the encoded and/or compressed volumetric data representation and/or the plurality of encoded and/or compressed error pseudo views. The encoder may transmit the bitstream to the decoder. The encoded and/or compressed volumetric data representation and the plurality of encoded and/or compressed error pseudo views may be transmitted in a single bitstream and/or a multiple bitstreams. The encoder may also transmit an indication of utilizing the plurality of error pseudo views for the video decoding.

At 940, the decoder receives the bitstream comprising the encoded volumetric data representation and/or the plurality of encoded error pseudo views.

At 945, the decoder decodes the bitstream to retrieve the volumetric data representation, i.e. the decoded volumetric data representation.

At 950, the decoder decodes the bitstream to retrieve the plurality of error pseudo views.

At 960, the decoder optimizes the volumetric data representation based on the plurality of decoded error pseudo views. The decoder generates the improved volumetric data representation.

At 970, the decoder generates the plurality of new views based on the improved volumetric data representation. The decoder renders the plurality of new views to generate the final video data.

In an implementation, the plurality of views (e.g. a plurality of images) to be encoded and transmitted are the plurality of error pseudo-views. That is, an image difference between a plurality of pseudo-views *Pᵢ* and *Pⱼ* at the same position but generated differently. For example, the pseudo-views *Pᵢ* are generated from a complex volumetric data model that is subsequently simplified. With the simplified model, new pseudo-views *Pⱼ* are generated at the same positions. The simplified model and the image difference between *Pᵢ* and *Pⱼ* (the error pseudo-views) are encoded and transmitted. Since the plurality of error pseudo-views have smaller values and even null values in most of a plurality of pixels, the plurality of error pseudo views are more efficient in a compression scheme. Also, this implementation facilitates and/or allows transmission of a simplified volumetric model. Another example of this implementation is a content with one or more available depth estimates (e.g. multi-view plus depth (MVD) etc.). In this case, the pseudo-views *Pᵢ* are generated using the depth estimates and the input views directly and the pseudo-views *Pⱼ* are generated via projection (e.g. the α - - blending etc.) of the volumetric data representation. The volumetric representation is encoded along the *Pᵢ* and Pⱼ.

In an implementation, the error pseudo views may be processed before encoding. For instance, examples of processing may include but are not limited to, in an example one or more values smaller than a threshold may be set to zero. In an example, one or more isolated points (e.g. one or more points in an image and/or one or more points in a view etc.) may be set to zero. In an example, the one or more points outside a given region of interest may be set to zero. In an example, the one or more points belonging to a background may be set to zero. In an example, the one or more points belonging to one or more Lambertian surfaces (e.g. when material segmentation is available) may be set to zero. In an example, patches and/or regions of the images may be reorganized into an atlas. In an example, the processing may also be performed on the plurality of pseudo-views.

In an implementation, the quality of the final video data (e.g. the final rendering) is improved, even when the plurality of discrete input views (e.g. input scenes) are captured with a limited number of input views and/or the volumetric data representation is obtained with the simplified model.

In an implementation, the plurality of pseudo views and/or the plurality of error pseudo views are transmitted along with the volumetric data representation which is easily detectable.

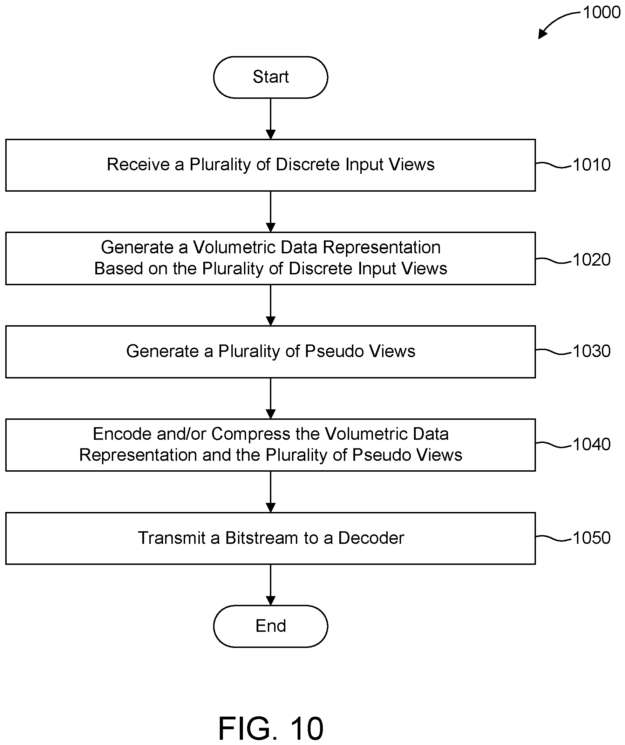

FIG. 10 illustrates a flowchart of an example process 1000 of encoding the volumetric data representation and the plurality of pseudo views in which various aspects of the embodiments may be implemented. The process 1000 may be implemented by the encoder.

At 1010, the encoder generates and/or receives the plurality of discrete input views. In an example, the plurality of discrete input views may be one or more frames captured by the camera of the user device. In an example, the one or more frames and/or the plurality of discrete input views may be captured at different camera positions, same camera positions and/or similar camera positions etc.

At 1020, the encoder generates the volumetric data representation. The volumetric data representation may be generated based on the plurality of discrete input views. The volumetric data representation may include but is not limited to 3DGs, NeRFs, and/or MPls etc. for example.

At 1030, the encoder generates the plurality of pseudo views based on at least one of: the volumetric data representation and/or the plurality of discrete input views.

At 1040, the encoder encodes and/or compresses the volumetric data representation and the plurality of pseudo views.

At 1050, the encoder generates and transmits the bitstream comprising the encoded and/or compressed volumetric data representation and the plurality of encoded and/or compressed pseudo views.

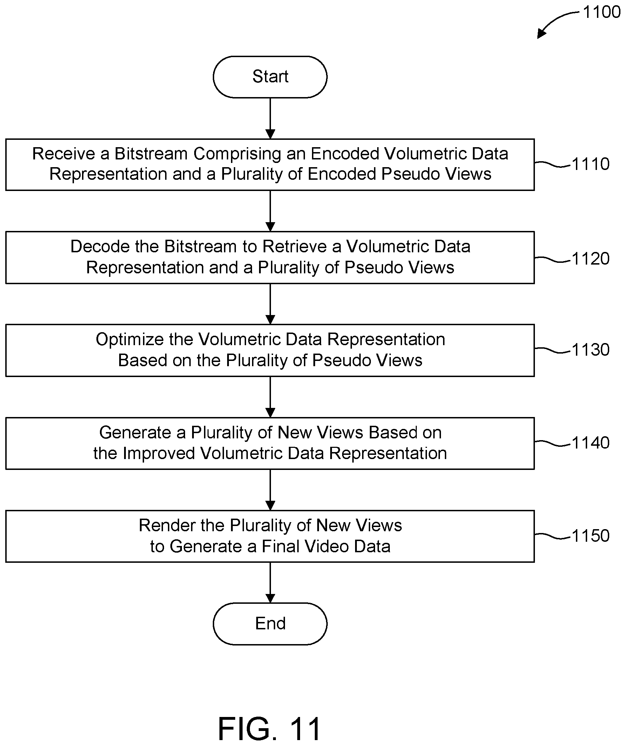

FIG. 11 illustrates a flowchart of an example process 1100 of decoding the volumetric data representation and the plurality of pseudo views in which various aspects of the embodiments may be implemented. The process 1100 may be implemented by the decoder.

At 1110, the decoder receives the bitstream including the volumetric data representation and the plurality of pseudo views.

At 1120, the decoder decodes the bitstream to retrieve the volumetric data representation (i.e. the decoded volumetric data representation) and the plurality of pseudo views (i.e. the plurality of decoded pseudo views).

At 1130, the decoder optimizes the volumetric data representation based on the plurality of decoded pseudo views to generate the improved volumetric data representation.

At 1140, the decoder generates the plurality of new views based on the improved volumetric data representation.

At 1150, the decoder renders the plurality of new views to generate the final video data. The final video data may be output and/or displayed to the user.

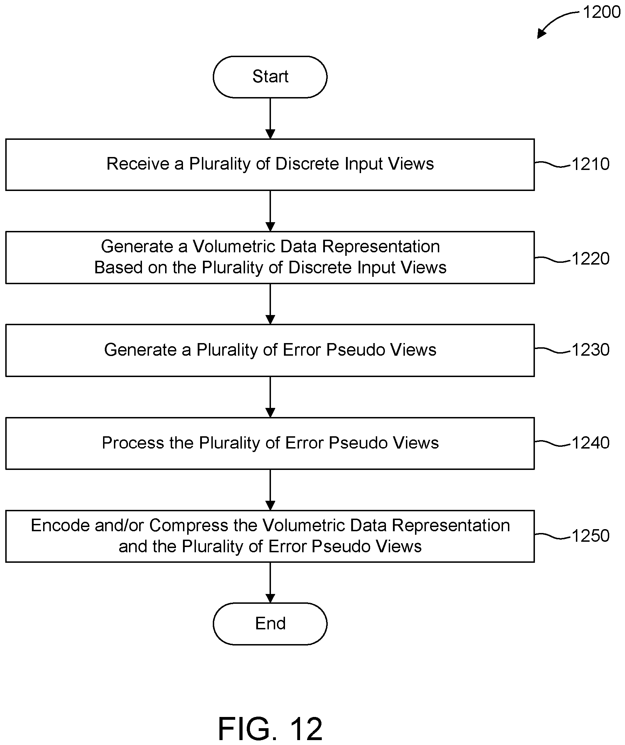

FIG. 12 illustrates a flowchart of an example process 1200 of encoding the volumetric data representation and the plurality of error pseudo views in which various aspects of the embodiments may be implemented. The process 1200 may be implemented by the encoder.

At 1210, the encoder generates and/or receives the plurality of discrete input views.

At 1220, the encoder generates the volumetric data representation.

At 1230, the encoder generates the plurality of error pseudo views based on at least one of: the volumetric data representation and/or the plurality of discrete input views.

At 1240, the encoder processes the plurality of error pseudo views to generate the plurality of processes error pseudo views.

At 1250, the encoder encodes the volumetric data representation and the plurality of error pseudo views (and/or the plurality of processed error pseudo views). The encoder generates and transmits the bitstream comprising the volumetric data representation and the plurality of error pseudo views (and/or the plurality of processed error pseudo views).

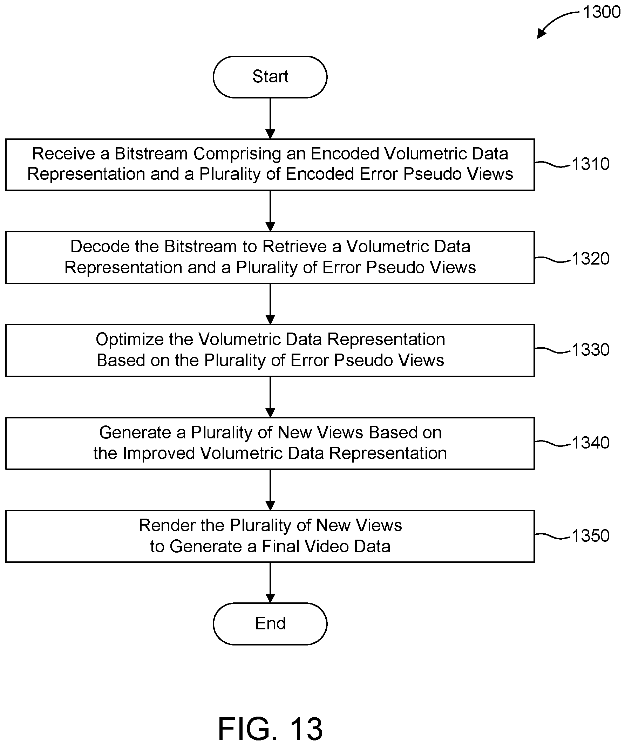

FIG. 13 illustrates a flowchart of an example process 1300 of decoding the volumetric data representation and the plurality of error pseudo views in which various aspects of the embodiments may be implemented. The process 1300 may be implemented by the decoder.

At 1310, the decoder receives the bitstream including the volumetric data representation and the plurality of error pseudo views (and/or the plurality of processed error pseudo views).

At 1320, the decoder decodes the bitstream to retrieve the volumetric data representation (i.e. the decoded volumetric data representation) and the plurality of error pseudo views (i.e. the plurality of decoded error pseudo views).

At 1330, the decoder optimizes the volumetric data representation based on the plurality of decoded error pseudo views to generate the improved volumetric data representation.

At 1340, the decoder generates the plurality of new views based on the improved volumetric data representation.

At 1350, the decoder renders the plurality of new views to generate the final video data. The final video data may be output and/or displayed to the user.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Moreover, the present aspects are not limited to V-PCC, G-PCC, P11, or V-DMC, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A decoder, comprising:
a memory;
a transceiver configured to receive a bitstream comprising an encoded volumetric data representation and a plurality of encoded pseudo views; and
a processor configured to:
decode the bitstream to retrieve a volumetric data representation and a plurality of pseudo views,
optimize the volumetric data representation based on the plurality of pseudo views to generate an improved volumetric data representation,
generate a plurality of new views based on the improved volumetric data representation, and
render the plurality of new views to generate a final video data.

2. The decoder of claim 1, wherein the processor is further configured to generate a plurality of views based on the volumetric data representation.

3. The decoder of claim 2, wherein the processor is further configured to compute a loss function indicative of an error between the plurality of pseudo views and the plurality of views.

4. The decoder of claim 3, wherein optimizing the volumetric data representation comprises minimizing the loss function.

5. The decoder of claim 4, wherein the plurality of pseudo views include a first set of input views associated with a first set of input camera positions.

6. The decoder of claim 5, wherein the processor is further configured to generate, based on the volumetric data representation, a second set of input views associated with a second set of input camera positions when the plurality of pseudo views do not include the second set of input views.

7. A method performed by a video decoder, the method comprising:
receiving a bitstream comprising an encoded volumetric data representation and a plurality of encoded pseudo views;
decoding the bitstream to retrieve a volumetric data representation and a plurality of pseudo views;
optimizing the volumetric data representation based on the plurality of pseudo views for generating an improved volumetric data representation;
generating a plurality of new views based on the improved volumetric data representation; and
rendering the plurality of new views for generating a final video data.

8. The method of claim 7, further comprising generating a plurality of views based on the volumetric data representation.

9. The method of claim 8, further comprising computing a loss function indicative of an error between the plurality of pseudo views and the plurality of views.

10. The method of claim 9, wherein optimizing the volumetric data representation comprises minimizing the loss function.

11. The method of claim 10, wherein the plurality of pseudo views include a first set of input views associated with a first set of input camera positions.

12. The method of claim 11, further comprising generating, based on the volumetric data representation, a second set of input views associated with a second set of input camera positions when the plurality of pseudo views do not include the second set of input views.

13. A circuit configured to perform any of the methods of claims 7 through 12.

14. A video codec device comprising one or more processors configured to perform any of the methods of claims 7 through 12.

15. A non-transitory computer-readable medium comprising instructions that, when executed by one or more processors of a computing device, cause the one or more processors to perform any of the methods of claims 7 through 12.
